# EUROPEAN PATENT SPECIFICATION

(11) **EP 3 787 446 B1**
(45) Date of publication and mention of the grant of the patent: **19.06.2024**
(21) Application number: 19803379.7
(22) Date of filing: 10.05.2019
(51) Int. Cl.: A47J 37/06, A47J 37/07

(54) **CONTINUOUS COOKING SURFACE WITH INDIVIDUALLY CONTROLLABLE HEATING ZONES**
KONTINUIERLICHE KOCHFLÄCHE MIT INDIVIDUELL STEUERBAREN HEIZZONEN
SURFACE DE CUISSON CONTINUE À ZONES DE CHAUFFAGE POUVANT ÊTRE COMMANDÉES INDIVIDUELLEMENT

(30) Priority: 15.05.2018 US 201815980599
(43) Date of publication of application: 10.03.2021
(73) Proprietor: Evo America, LLC, Tualatin, OR 97062 (US)
(72) Inventor: SHINGLER, Robert, A., Beaverton, Oregon 97007 (US); SHAW, Joseph, R., Beaverton, Oregon 97008 (US)
(74) Representative: Horn Kleimann Waitzhofer Schmid-Dreyer Patent- und Rechtsanwälte PartG mbB
(86) International application number: PCT/US2019/031784
(87) International publication number: WO 2019/222053

(56) References cited:
- EP-A1- 1 946 685
- WO-A2-2009/007781
- JP-A- S5 711 618
- US-A- 2 696 162
- US-A- 4 369 763
- US-A1- 2009 050 131
- US-A1- 2010 199 857
- US-A1- 2014 161 952

## Description

The present invention relates to a grill.

### BACKGROUND

A grill may include a continuous cooking surface heated by one or more heating elements positioned beneath the cooking surface.
US 2 696 162 A describes a multiple-unit cooking device comprising a substantially rectangular body structure, relatively narrow, rigid, wall means extending along opposite sides of said structure, a rigid cooking top comprising a plurality of rigid, planesurfaced cooking units bridging said wall means, means for individually heating said cooking units to a desired temperature and a tubular spring metal grease-guard member of substantially circular cross-sectional shape interposed between adjacent units below the surface of said cooking units and in continuous intimate engagement with the side walls thereof, said members being coextensive with said units and having an imperforate upper wall.
US 2009/0050131 A1 describes a water-cooled barbecue system comprising a body, an upper portion thereof being open to provide heat from the supplied fuel, a receiving space being defined by the body, a grill with a frame, the frame having a first communicating hole and a second communicating hole to introduce and/or discharge fluid, a fluid circulation tube communicating between the first communicating hole and the second communicating hole being provided inside of the frame, and a cooling device for cooling fluid which circulates inside of the fluid circulation tube.
EP 1 946 685 A1 describes a grilling plate which is divided into different sections, wherein at least a part of the sections is connected to a heating element. To better maintain different temperatures in different sections, the grilling plate comprises a plate forming the top side of it and extending uniformly along all sections, wherein the sections are divided by at least one groove being arranged in the bottom side of the plate.

### SUMMARY

According to the invention is provided a grill, comprising a grill plate defining a continuous cooking surface comprising a plurality of individually controllable heating zones separated by one or more isolation zones, each heating zone comprising one or more heating elements positioned beneath the grill plate and each isolation zone comprising a cooling fluid channel, and the grill also comprising a cooling fluid circulation system configured to control a flow of a cooling fluid through the cooling fluid channel for each isolation zone.

Preferred embodiments of the invention are disclosed in the dependent claims.

### BRIEF DESCRIPTION OF THE DRAWINGS

FIG. 1 shows a top view of an example grill comprising a continuous cooking surface with individually controllable heating zones separated by isolation zones.
FIG. 2 shows a perspective view of the continuous cooking surface of the grill of FIG. 1.
FIG. 3 shows a side view of the continuous cooking surface of the grill of FIG. 1.
FIG. 4 shows a bottom perspective view of the continuous cooking surface of the grill of FIG. 1.
FIG. 5 shows a sectional view of the continuous cooking surface of the grill of FIG. 1.
FIG. 6 shows a schematic diagram of an example cooling system for cooling an isolation bar.
FIG. 7 shows an example edge configuration for a continuous cooking surface.
FIG. 8 shows an example heater compression plate assembly.
FIG. 9-10 schematically show an example continuous cooking surface having isolation zones comprising channels formed in a grill plate.
FIGS. 11-14 schematically show views of a grill plate having a cooling channel and cover.
FIGS. 15-17 schematically show a continuous cooking surface having a cooling channel bored into a grill plate.
FIG. 18 shows a schematic diagram of an example cooling fluid circulation system configured to form two isolation zones on a grill plate.
FIG. 19 shows a top view of the grill plate of FIG. 18 and schematically illustrates example locations for cooling fluid channels.

### DETAILED DESCRIPTION

As mentioned above, a grill may include a continuous cooking surface with one or more heating elements positioned beneath the cooking surface to heat the cooking surface. In some situations, it may be desirable to cook foods at different temperatures on the same cooking surface. For example, a person may wish to reduce a sauce or soup in a pot or pan at a higher temperature, then simmer the sauce or soup at a lower temperature. When using a grill with a single temperature control, the person may first place the pot or pan closer to an outside edge of the grill, and then move the pot or pan to the middle, as heating element positioning and heat transfer characteristics may cause the cooking surface temperature to decrease toward the outside edge. As another example, a person may wish to simultaneously cook meats and vegetables on the same grill at different temperatures, and thus the person may cook vegetables closer to the outside edge of the grill while cooking meats closer to the middle. However, the temperature in the cooler region may not be easily controllable or measurable in such an arrangement.

Some grills may include individually controllable heating elements for different heating zones of the continuous cooking surface, which may provide more control over the temperatures of different regions of the continuous cooking surface. However, as the materials from which the cooking surfaces are made are good thermal conductors, it may be difficult to maintain the temperatures of different heating zones at desired levels, particularly with large temperature differentials, due to the transfer of heat between regions.

Accordingly, examples are disclosed herein that relate to a cooking system having a continuous cooking surface comprising heating zones that may be more easily maintained at different temperatures. The individual heating zones of the continuous cooking surface are separated by one or more isolation zones incorporated into the continuous cooking surface. Such isolation zones may include cooling features to facilitate air or fluid-assisted cooling, thereby helping to lessen the conduction of heat between adjacent heating zones. Further, as the cooking surface is continuous, food may be easily moved between cooking surface by sliding the food from one heating zone to another.

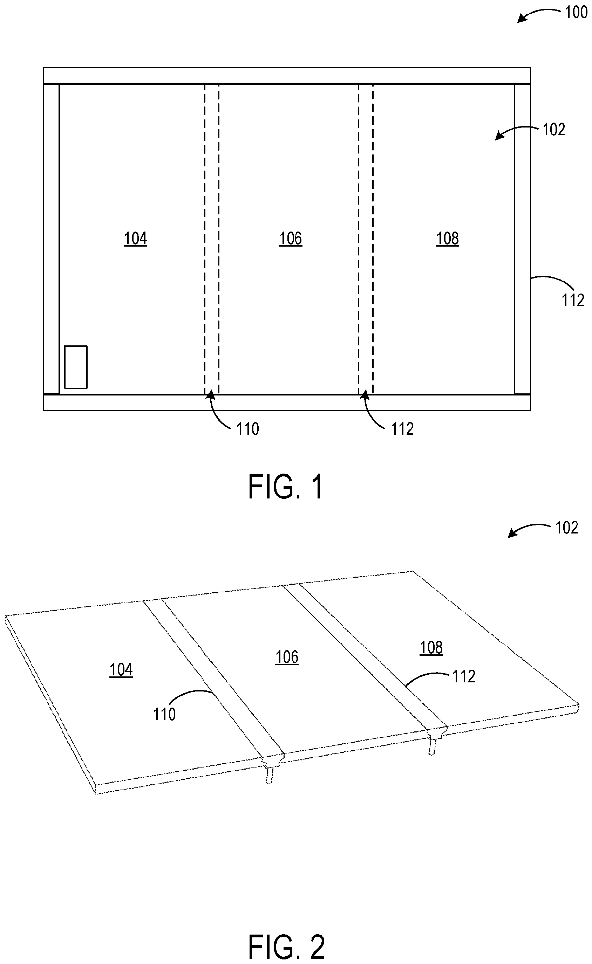

FIG. 1 schematically shows a top view of an example cooking system 100 having a continuous cooking surface 102 segmented into three heating zones 102, 104, and 106 by isolation zones 108 and 110. Heating zones 102, 104 and 106 have individually controllable heating elements, such that each heating zone can be set at a different temperature relative to adjacent heating zones, whether higher or lower. While heating zones and two isolation zones are shown, a cooking system may have any other suitable number of heating zones and cooling zones. FIG. 1 also illustrates a flange 112 surrounding the cooking surface, e.g. to help contain food from spilling over an edge of the cooking surface 102.

FIG. 2 shows a perspective view of the cooking surface 102. The isolation zones 108 and 110 take the form of isolation bars joined to adjacent heating plates of adj acent heating zones, such that upper surfaces of the isolation bars and heating plates form the continuous cooking surface.

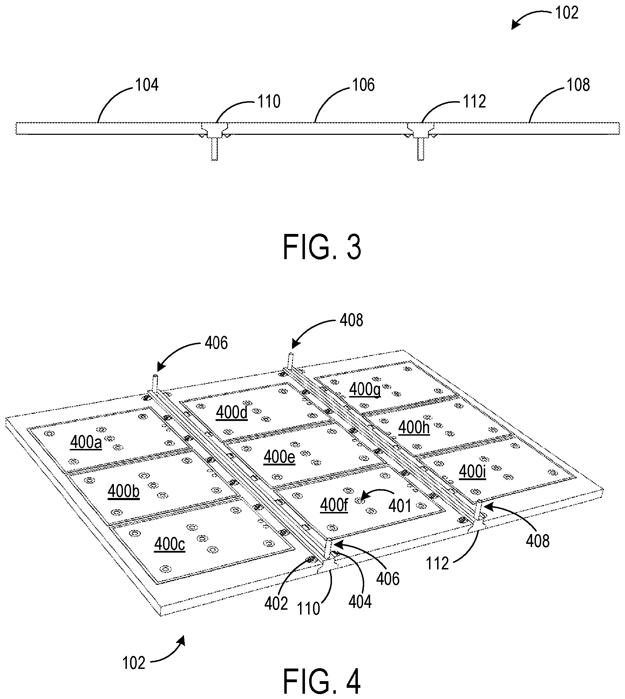

FIG. 3 shows a side view of the cooking surface 102. As depicted, the upper surfaces of isolation bars 110 and 112 are level with the upper surfaces of heating zones 104, 106, and 108 to form a level, continuous surface across which food and/or cookware can be easily moved. The heating zones 104, 106 and 108 and the isolation bars 110, 112 may be formed from any suitable material(s). In some examples, the heating zones 104, 106, and 108 comprise thermally conductive plates formed from steel. The thermally conductive plates may have any suitable thickness, including but not limited to thicknesses between 1.27 and 2.54 cm (0.5 and 1 inch). The isolation bars 110, 112 may be formed from a same material as the heating zone plates, or from a different material than adjacent heating zone plates, such as a material having a lower thermal conductivity than the heating zone plates.

FIG. 4 shows a bottom view of the cooking surface 102, and illustrates an example arrangement of heating elements 400 for each heating zone. In the depicted example, the cooking system comprises three heating elements for each heating zone, for a total of nine heating elements 400a-i. The heating elements may utilize any suitable heating mechanism. For example, the depicted heating elements may comprise resistive heating elements formed from an etched resistive foil located between insulating layers. In other examples, any other suitable number, size, and arrangement of heating elements of any suitable shape/size/heating mechanism may be used.

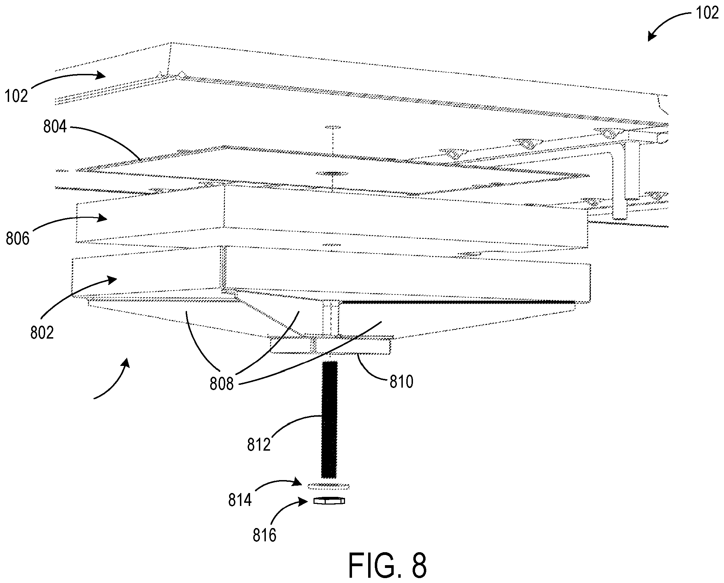

In the depicted example, each heating element 400 includes a hole 401 to accommodate a temperature sensor (e.g. a thermocouple) for monitoring temperature of the heating plate above the heating element. In other examples, any other suitable arrangement of temperature sensors may be used such as fewer temperature sensors than heating elements per heating zone, or more than one temperature sensor per heating element. In the depicted example, each heating element further includes six holes to accommodate fasteners for fastening the heating element to a cooking surface. In other examples, any other arrangement of and/or type of attachment points for fasteners may be used. Another example arrangement in which only a single attachment point is utilized to fasten each heating element to the cooking surface is described below with regard to FIG. 8.

Signals from each of the temperature sensors may be sent to a temperature controller to allow independent control of each heating element based on the sensed temperatures. For example, the controller may be configured to automatically provide more or less power to one or more heating elements underneath a heating zone to maintain the temperature of that heating zone at a set temperature.

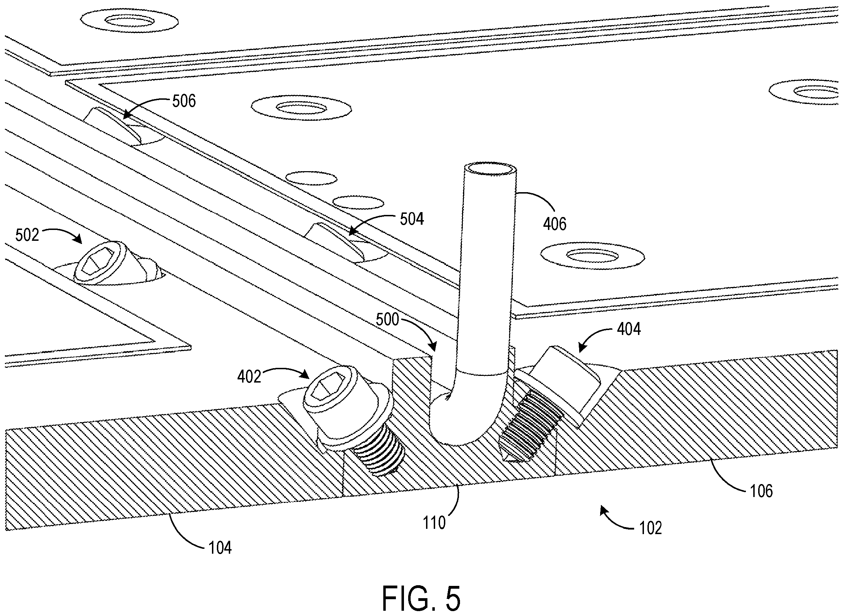

Each isolation bar 110, 112 may be secured to adjacent conductive plates in any suitable manner. FIGS. 4 and 5 show one example in the form of bolts, two of which are indicated at 402 and 404. In other examples, other suitable fasteners may be used. Referring to FIG. 5, each bolt is angled with respect to a plane of the cooking surface 102. This arrangement may help to provide for a suitably tight connection of each isolation bar to adjacent conductive plates. In other examples, any other suitable fasteners may be utilized to join each isolation bar to adjacent conductive plates.

Each isolation bar may have any suitable structure that helps lessen heat transfer between heating zones. In the depicted embodiment, each isolation bar includes a cooling channel that takes the form of a recess in an underside of the isolation bar that extends at least partially along a length of the isolation bar. In other examples, the cooling channel may take the form of a bore formed at least partially through a length of the isolation bar, as opposed to a recess in an underside of the isolation bar. In the depicted example, each cooling channel accommodates a cooling fluid conduit, such as a tube 406 and 408 for each of isolation bars 110 and 112, respectively. FIG. 5 shows a closer, detailed cutaway view of the isolation bar 110 including cooling channel 500 in which conduit 406 is positioned. Though shown herein as a U-shaped channel, a cooling channel may take any other suitable shape and may be formed along any suitable length of each isolation bar. Further, in other examples, the cooling channel may facilitate air cooling by increasing a surface area of the cooling channel in contact with ambient air or a flow of air from a fan or other blower, as opposed to accommodating a cooling fluid conduit. In other examples, cooling channels may be formed along the top sides or lateral sides of the isolation bars, rather than in the undersides or as a borehole through an interior region. In yet other examples, one or more isolation bars may not include cooling channels, and may instead rely on different thermal conductivities of each heating zone plate to provide suitable thermal isolation.

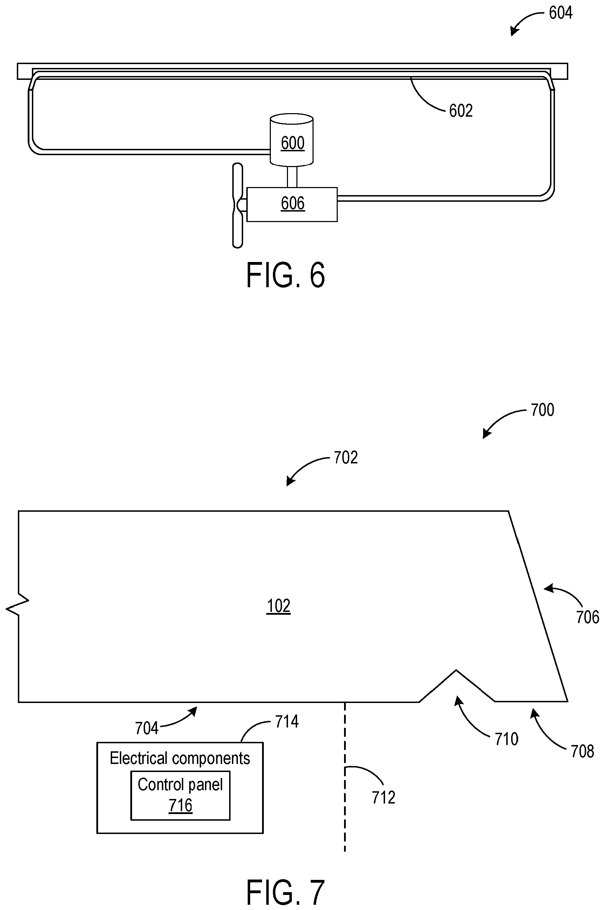

Where a cooling fluid is used as a part of a cooling system for the isolation bars of a cooling surface, the cooling system further may include a pump configured to move a cooling fluid through the cooling fluid conduit in each isolation bar. FIG. 6 schematically shows an example pump 600 that moves a cooling fluid through the conduit 602 of an isolation bar 604. Any suitable cooling fluid may be pumped through the isolation bars, including but not limited to water and glycol-based coolants, a compressed refrigerant, or air. An air-cooled radiator 606 may help to cool the coolant after the coolant travels through the isolation bar 604. In other examples, any other suitable cooling techniques may be utilized.

In some examples, the cooking surface may be suspended above a supporting base structure, e.g. a body 712 or other structure, where a portion of the cooking surface perimeter extends beyond the base structure. Further, the perimeter of the cooking surface extending beyond this base structure may include elements that help to prevent oil and other liquids from dripping down an edge of the cooking surface and migrating to an underside of the cooking surface. FIG. 7 shows a side view of an example configuration of an edge 700 of the cooking surface 102, illustrating the top surface at 702, the underside 704, and an outside edge 706. The outside edge 706 may be straight or may be angled to any suitable degree, either outward as shown, or inward in other examples. The edge 700 also includes a drip edge 708 that extends between the bottom of the outside edge 706 and a drip channel 710. The drip channel 710 may be formed in the underside 704 in an angled shape, as shown, or in any other suitable shape (e.g. circular), nearby the outside edge 706. Such a drip channel may be formed along each outside edge of the cooking surface 102. Oils and liquids from the top surface 702 that fall down the outside edge 706 may follow the drip edge 708 to the drip channel 710. The drip channel 710 may cause such oils and liquids to pool and fall down vertically from the channel, and thus help to prevent further movement of oils and liquids along the underside 704 toward a body of the grill, represented by dashed line 712, which may be damaging to electrical heating elements and other components that may be attached to the underside 704 of the cooking surface 102, or electrical components 714 on or within the body 712.

In additional examples, the grill may include a control panel 716 to allow control of various functions of the grill, such as the control of the temperature of the cooking surface, either as a whole or separately for each heating zone. User input may control the power supplied by a solid state relay for each heating element of a heating zone. The control panel 716 may further be configured to provide visual feedback, for example, to show a current temperature of each heating zone, as measured by the installed thermocouples. As an example, dynamic offsets may be utilized between each heating zone to calculate the actual surface temperature from the temperature as measured by the thermocouples, as the thermocouple measurements of the underside of the cooking surface may differ from actual surface temperatures. The control panel 716 may utilize any suitable user input devices, including but not limited to buttons, knobs, and one or more touch sensitive displays. Likewise, the control panel 716 may include any suitable display devices, including but not limited to light-emitting diodes, liquid crystal displays, and organic light emitting devices.

FIG. 8 shows an example heater compression plate assembly 800 having a cassette 802 for securing a heating element 804 and an insulating refractory brick 806 against the underside of the cooking surface 102. In this example, the heating element 804 may be attached to the cooking surface 102 at a single location. Such a compression method may allow for the more convenient attachment of the heating element 804 to the underside of the cooking surface 102 than other methods (e.g. welding) and may help to increase the watt density and efficiency of the heating element 804. The cassette 802 may be reinforced with longitudinal support structures 808 extending from a middle portion of the cassette 802 to the outer corners. Other distributed compression support structures also may be used, such as a suitably shaped washer 810. The cassette 802 may be secured and compressed to an underside of the cooking surface 102 by a threaded collar 812, washer 814, and nut 816, or by any other suitable attachment mechanism. A thermocouple may be inserted through the threaded collar 812, and into the underside of the cooking surface 102 to sense a temperature of the cooking surface 102 at that location, as mentioned above.

In the above examples, the isolation zones take the form of isolation bars joined to adjacent heating plates. In other examples, an isolation zone may comprise a cooling channel formed in a grill plate to accommodate a flow of cooling fluid to remove heat from the isolation zone, thereby helping to reduce heat transfer between adjacent heating zones. In some such examples, the cooling fluid channels comprise conduits located within the channels to conduct the cooling fluid, while in other examples the cooling fluid flows directly in the channels, without a separate conduit.

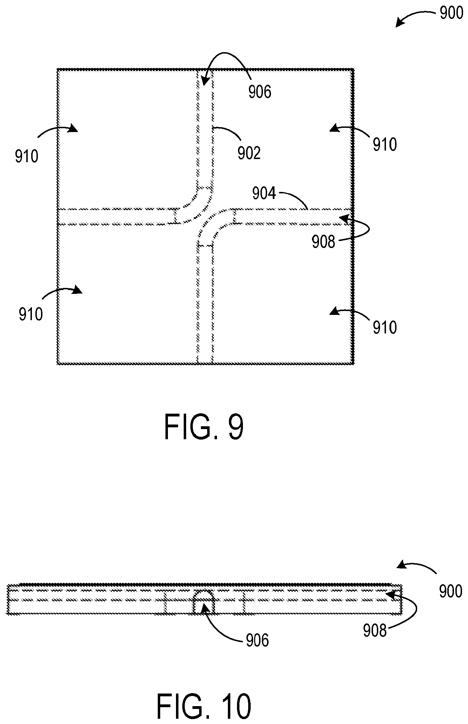

FIGS. 9-10 schematically show an example grill plate 900 having a continuous cooking surface and including isolation zones 902, 904 each comprising cooling fluid channels 906, 908 formed in an underside of the grill plate. The channels of FIG. 9 have a curved path which define a 2x2 grid of heating zones 910, thereby providing for four heating zones via the use of two channels. FIG. 10 shows a cross-sectional view of the grill plate 900. Cooling fluid may flow directly through the channels 906, 908 (e.g. by covering the channels with an appropriate sealing structure), or conduits may be placed in the channels for conducting a cooling fluid through the channels 906, 908.

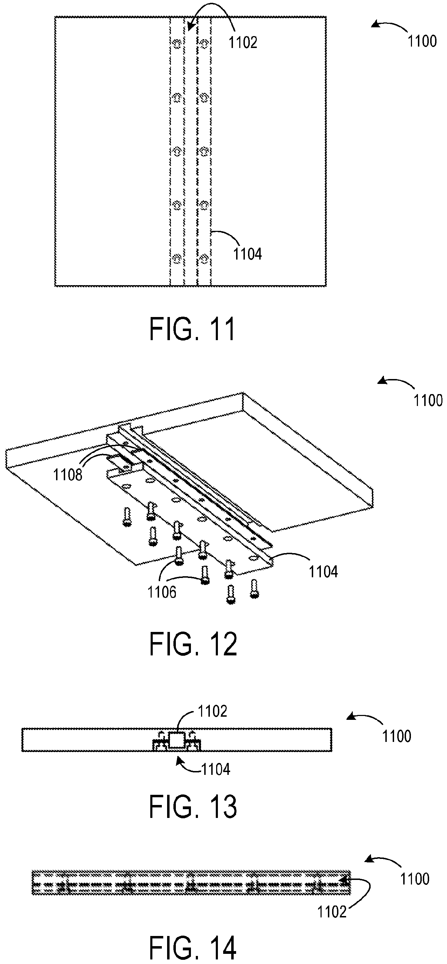

In the example of FIGS. 9-10, the channels have a curved configuration to define the 2x2 layout of heating zones. FIGS. 11-14 show another example in which a grill plate 1100 has a channel 1102 with a straight configuration. Further, a cover 1104 is attached to the grill plate 1100 to cover the cooling fluid channel 1102, thereby defining a path for coolant flow without the use of a separate conduit within the channel 1102. The cover 1104 may be fastened to the grill plate 1100 in any suitable manner, such as via bolts 1106 or other suitable fasteners, and seals 1108 may be disposed in between the cover 1104 and the grill plate 1100. FIG. 13 shows a horizontal cross-sectional view of FIG. 11, and FIG. 14 shows a vertical cross-sectional view of FIG. 11, illustrating the resulting flow pathway and connection of the grill plate 1100 to the cover 1004.

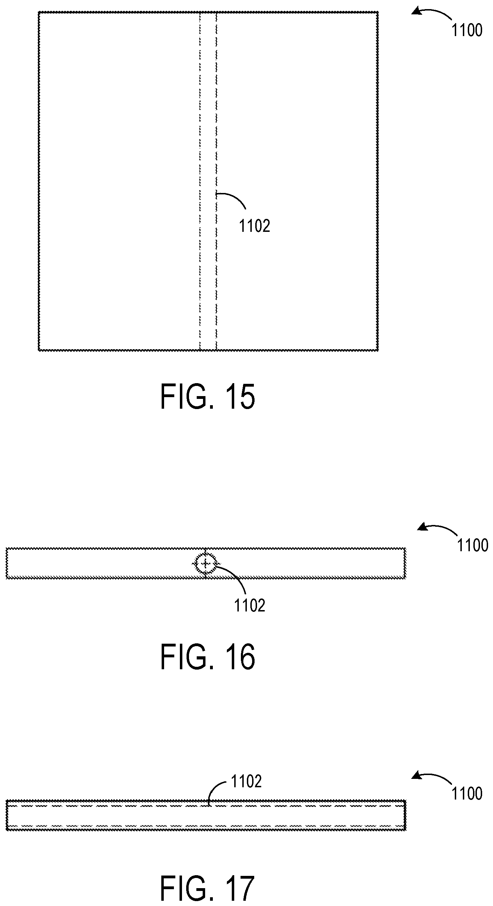

FIG. 15 schematically shows a grill plate 1500 having a cooling channel 1502 directly bored into the grill plate 1500, instead of being formed (e.g. by casting or milling) into an underside of the grill plate. FIG. 16 shows a horizontal cross-sectional view of FIG. 15, while FIG. 17 shows a vertical cross-sectional view of FIG. 15. The configuration of FIGS. 15-17 also eliminates the need to insert a separate coolant conduit.

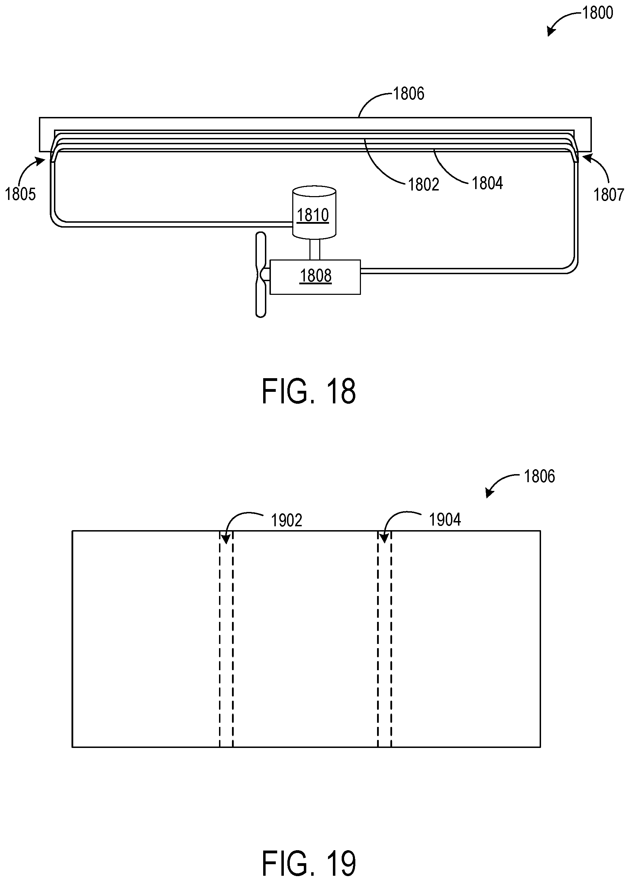

In any of the above examples, a grill includes a cooling fluid circulation system to control a flow of a cooling fluid throughout the cooling fluid channel of each isolation zone. The cooling fluid circulation system may include one or more pumps and one or more radiators to remove heat transferred from the grill plate by the cooling fluid. In various examples, each of the one or more radiators may be passively cooled via exposure to ambient air, or may be actively cooled, e.g. by a fan configured to direct a flow of air onto the radiator. In some examples, each isolation zone may have its own cooling fluid circulation system, while in other examples a common pump may deliver cooling fluid to multiple isolation zones via a common manifold. FIG. 18 shows a schematic diagram of an example cooling fluid circulation system 1800 having a dual conduit configuration, showing a manifold 1805 leading to conduits 1802, 1804 positioned in the grill plate 1206. The outflow of conduits 1802, 1804 connect to a return manifold 1807, which leads to a radiator 1808 cooled by a fan 1809 attached to the back of the radiator 1808. The cooling fluid circulation system further comprises a pump 1810 configured to circulate the cooling fluid. FIG. 19 shows a top view of the example grill plate 1806, and illustrates channels 1902 and 1904 formed in an underside of the grill plate 1806 in such a configuration as to define two isolation zones and three heating zones.

It will be understood that the configurations and/or approaches described herein are exemplary in nature, and that these specific embodiments or examples are not to be considered in a limiting sense, because numerous variations are possible within the scope of the claims.

## Claims

1. A grill (100), comprising:
a grill plate (900, 1100, 1206, 1500, 1806) defining a continuous cooking surface (102) comprising a plurality of individually controllable heating zones (104, 106, 108, 910) separated by one or more isolation zones (110, 112, 902, 904),
each heating zone (104, 106, 108, 910) comprising one or more heating elements (400, 804) positioned beneath the grill plate (900, 1100, 1206, 1500, 1806),
**characterized in** each isolation zone (110, 112, 902, 904) comprising a cooling fluid channel (906, 908, 1102); and
a cooling fluid circulation system (1800) configured to control a flow of a cooling fluid through the cooling fluid channel (906, 908, 1102) for each isolation zone (110, 112, 902, 904).

2. The grill of claim 1, wherein each isolation zone (110, 112, 902, 904) comprises a conduit (406, 408, 602, 1802, 1804) positioned in the cooling fluid channel (906, 908, 1102).

3. The grill of claim 1, wherein the cooling fluid channel (906, 908, 1102) is formed in an underside (704) of the grill plate (900, 1100, 1206, 1500, 1806).

4. The grill of claim 1, wherein the cooling fluid comprises one or more of water and a glycol-based coolant.

5. The grill of claim 1, wherein the grill plate (900, 1100, 1206, 1500, 1806) comprises three or more heating zones (104, 106, 108, 910).

6. The grill of claim 1, wherein the cooling fluid channel (906, 908, 1102) comprises a curve.

7. The grill of claim 1, wherein the cooling fluid circulation system (1800) comprises a common manifold for delivering cooling fluid to each isolation zone (110, 112, 902, 904) of a plurality of isolation zones (110, 112, 902, 904).

8. The grill of claim 1, wherein the cooling fluid circulation system (1800) further comprises a pump (600, 1810).

9. The grill of claim 1, wherein the cooling fluid circulation system (1800) comprises one or more radiators (606, 1808) configured to remove heat transferred from the grill plate (900, 1100, 1206, 1500, 1806) via the cooling fluid.

10. The grill of claim 1, wherein one or more heating elements (400, 804) of a first heating zone (104, 106, 108, 910) are independently controllable relative to one or more heating elements (400, 804) of a second heating zone (104, 106, 108, 910).

11. The grill of claim 1, wherein each cooling fluid channel (906, 908, 1102) being formed in an underside of the cooking surface (102).

12. The grill of claim 11, further comprising a cooling fluid conduit (406, 408, 602, 1802, 1804) positioned in each cooling fluid channel (906, 908, 1102).

13. The grill of claim 11, wherein the grill comprises a 2 x 2 arrangement of heating zones (104, 106, 108, 910).

14. The grill of claim 11, wherein one or more heating elements (400, 804) of a first heating zone (104, 106, 108, 910) are independently controllable relative to one or more heating elements (400, 804) of a second heating zone (104, 106, 108, 910).

## Patentansprüche

1. Ein Grill (100), aufweisend:
eine Grillplatte (900, 1100, 1206, 1500, 1806), die eine durchgehende Kochfläche (102) definiert, die eine Vielzahl von einzeln steuerbaren Heizzonen (104, 106, 108, 910) aufweist, die durch eine oder mehrere Isolationszonen (110, 112, 902, 904) voneinander getrennt sind,
wobei jede Heizzone (104, 106, 108, 910) ein oder mehrere Heizelemente (400, 804) aufweist, die unter der Grillplatte (900, 1100, 1206, 1500, 1806) angeordnet sind,
**dadurch gekennzeichnet, dass** jede Isolierzone (110, 112, 902, 904) einen Kühlfluidkanal (906, 908, 1102) aufweist; und
ein Kühlfluidzirkulationssystem (1800), das dazu eingerichtet ist, einen Fluss eines Kühlfluids durch den Kühlfluidkanal (906, 908, 1102) für jede Isolationszone (110, 112, 902, 904) zu steuern.

2. Der Grill nach Anspruch 1, wobei jede Isolationszone (110, 112, 902, 904) eine Leitung (406, 408, 602, 1802, 1804) aufweist, die in dem Kühlfluidkanal (906, 908, 1102) angeordnet ist.

3. Der Grill nach Anspruch 1, wobei der Kühlfluidkanal (906, 908, 1102) in einer Unterseite (704) der Grillplatte (900, 1100, 1206, 1500, 1806) ausgebildet ist.

4. Der Grill nach Anspruch 1, wobei das Kühlfluid entweder Wasser oder ein Kühlmittel auf Glykolbasis aufweist.

5. Der Grill nach Anspruch 1, wobei die Grillplatte (900, 1100, 1206, 1500, 1806) drei oder mehr Heizzonen (104, 106, 108, 910) aufweist.

6. Der Grill nach Anspruch 1, wobei der Kühlfluidkanal (906, 908, 1102) eine Kurve aufweist.

7. Der Grill nach Anspruch 1, wobei das Kühlfluidzirkulationssystem (1800) einen gemeinsamen Verteiler zum Zuführen von Kühlfluid zu jeder Isolationszone (110, 112, 902, 904) einer Vielzahl von Isolationszonen (110, 112, 902, 904) aufweist.

8. Der Grill nach Anspruch 1, wobei das Kühlfluidzirkulationssystem (1800) ferner eine Pumpe (600, 1810) aufweist.

9. Der Grill nach Anspruch 1, wobei das Kühlfluidzirkulationssystem (1800) einen oder mehrere Kühler (606, 1808) aufweist, die dazu eingerichtet sind, die von der Grillplatte (900, 1100, 1206, 1500, 1806) über das Kühlfluid übertragene Wärme abzuführen.

10. Der Grill nach Anspruch 1, wobei ein oder mehrere Heizelemente (400, 804) einer ersten Heizzone (104, 106, 108, 910) unabhängig von einem oder mehreren Heizelementen (400, 804) einer zweiten Heizzone (104, 106, 108, 910) steuerbar sind.

11. Der Grill nach Anspruch 1, wobei jeder Kühlfluidkanal (906, 908, 1102) in einer Unterseite der Kochfläche (102) ausgebildet ist.

12. Der Grill nach Anspruch 11, ferner aufweisend eine Kühlfluidleitung (406, 408, 602, 1802, 1804), die in jedem Kühlfluidkanal (906, 908, 1102) angeordnet ist.

13. Der Grill nach Anspruch 11, wobei der Grill eine 2x2 Anordnung von Heizzonen (104, 106, 108, 910) aufweist.

14. Der Grill nach Anspruch 11, wobei ein oder mehrere Heizelemente (400, 804) einer ersten Heizzone (104, 106, 108, 910) unabhängig von einem oder mehreren Heizelementen (400, 804) einer zweiten Heizzone (104, 106, 108, 910) steuerbar sind.

## Revendications

1. Un gril (100), comprenant:
une plaque de gril (900, 1100, 1206, 1500, 1806) définissant une surface de cuisson continue (102) comprenant une pluralité de zones de chauffage contrôlables individuellement (104, 106, 108, 910) séparées par une ou plusieurs zones d'isolation (110, 112, 902, 904),
chaque zone de chauffage (104, 106, 108, 910) comprend un ou plusieurs éléments chauffants (400, 804) placés sous la plaque du gril (900, 1100, 1206, 1500, 1806),
**caractérisé par** chaque zone d'isolation (110, 112, 902, 904) comprenant un canal de fluide de refroidissement (906, 908, 1102); et
un système de circulation du fluide de refroidissement (1800) configuré pour contrôler le flux d'un fluide de refroidissement à travers le canal du fluide de refroidissement (906, 908, 1102) pour chaque zone d'isolation (110, 112, 902, 904).

2. Le gril de la revendication 1, dans lequel chaque zone d'isolation (110, 112, 902, 904) comprend un conduit (406, 408, 602, 1802, 1804) positionné dans le canal du fluide de refroidissement (906, 908, 1102).

3. Le gril de la revendication 1, dans lequel le canal du fluide de refroidissement (906, 908, 1102) est formé dans une face inférieure (704) de la plaque du gril (900, 1100, 1206, 1500, 1806).

4. Le gril de la revendication 1, dans lequel le liquide de refroidissement comprend au moins de l'eau et un liquide de refroidissement à base de glycol.

5. Le gril de la revendication 1, dans lequel la plaque du gril (900, 1100, 1206, 1500, 1806) comprend trois zones de chauffage ou plus (104, 106, 108, 910).

6. Le gril de la revendication 1, dans lequel le canal du fluide de refroidissement (906, 908, 1102) comprend une courbe.

7. Le gril de la revendication 1, dans lequel le système de circulation du fluide de refroidissement (1800) comprend un collecteur commun pour délivrer le fluide de refroidissement à chaque zone d'isolation (110, 112, 902, 904) d'une pluralité de zones d'isolation (110, 112, 902, 904).

8. Le gril de la revendication 1, dans lequel le système de circulation du fluide de refroidissement (1800) comprend en outre une pompe (600, 1810).

9. Le gril de la revendication 1, dans lequel le système de circulation du fluide de refroidissement (1800) comprend un ou plusieurs radiateurs (606, 1808) configurés pour éliminer la chaleur transférée de la plaque du gril (900, 1100, 1206, 1500, 1806) par le fluide de refroidissement.

10. Le gril de la revendication 1, dans lequel un ou plusieurs éléments chauffants (400, 804) d'une première zone de chauffage (104, 106, 108, 910) sont indépendamment contrôlables par rapport à un ou plusieurs éléments chauffants (400, 804) d'une deuxième zone de chauffage (104, 106, 108, 910).

11. Le gril de la revendication 1, dans lequel chaque canal de fluide de refroidissement (906, 908, 1102) est formé dans une face inférieure de la surface de cuisson (102).

12. Le gril de la revendication 11, comprenant en outre un conduit de fluide de refroidissement (406, 408, 602, 1802, 1804) positionné dans chaque canal de fluide de refroidissement (906, 908, 1102).

13. Le gril de la revendication 11, dans lequel le gril comprend une disposition 2 x 2 des zones de chauffage (104, 106, 108, 910).

14. Le gril de la revendication 11, dans lequel un ou plusieurs éléments chauffants (400, 804) d'une première zone de chauffage (104, 106, 108, 910) sont indépendamment contrôlables par rapport à un ou plusieurs éléments chauffants (400, 804) d'une deuxième zone de chauffage (104, 106, 108, 910).
